# EUROPÄISCHE PATENTANMELDUNG

(11) **EP 0 937 561 A1**
(43) Veröffentlichungstag der Anmeldung: **25.08.1999**
(21) Anmeldenummer: 98102855.8
(22) Anmeldetag: 19.02.1998
(51) Int. Cl.: B29C 33/04, B29C 45/73, B29C 41/46, B29C 41/04

(54) **Interne Flüssiggaskühlung**

(71) Anmelder: FOBOHA GmbH, D-77716 Haslach (DE)
(72) Erfinder: Bodmer, Werner, 77716 Haslach (DE); Bodmer, Udo, 77716 Haslach (DE); Armbruster, Rainer, 77709 Wolfach (DE)
(74) Vertreter: Frei, Alexandra Sarah

(57) **Zusammenfassung**

Beim Verfahren zur internen Kühlung eines drehbaren Gegenstandes (4) wird flüssiges Gas aus mindestens einem Zuführkanal (61) in einem ortsfesten Gegenstand (5) in eine an einer Kontaktfläche (45) zwischen dem ortsfesten Gegenstand (5) und dem drehbaren Gegenstand (4) befindliche kreisförmige Nut (62) gepresst. Aus der kreisförmigen Nut (62) wird das flüssige Gas in mindestens einen Kanal (63, 64.1, 64.2) im drehbaren Gegenstand (4) gepresst und mindestens einem zu kühlenden Teil (15) zugeführt. Dort verdampft und expandiert es unter Aufnahme von Wärme, wodurch der zu kühlende Teil (15) abgekühlt wird. Die Umgebung des zu kühlenden Teils ist bspw. als Expansionskammer (65) gestaltet. Das Verfahren kann zum Kühlen von Formteilen in Spritzgiessmaschinen mit drehbaren Formen (1) angewendet werden, wodurch kürzere Zykluszeiten erzielt werden.

## Beschreibung

Die Erfindung bezieht sich auf ein Verfahren zur internen Kühlung eines drehbaren Gegenstandes mit flüssigem Gas und auf eine Vorrichtung zur Durchführung dieses Verfahrens gemäss den Oberbegriffen der unabhängigen Patentansprüche. Das Verfahren eignet sich insbesondere für die Kühlung von Formteilen in Spritzgiessmaschinen mit drehbaren Formen.

Auf vielen Gebieten der Technik besteht Bedarf nach einer internen Kühlung eines drehbaren Gegenstandes. Eine solche interne Kühlung wird bekanntermassen erzielt, indem eine Kühlflüssigkeit - bspw. Öl - aus einem nichtdrehbaren, ortsfesten Gegenstand in den daran zumindest teilweise angrenzenden drehbaren Gegenstand eingebracht wird. Im drehbaren Gegenstand wird sie dann dem zu kühlenden Teil zugeleitet; von diesem nimmt sie Wärmeenergie auf und führt sie weg, wodurch ein Kühleffekt entsteht. Dabei kann der drehbare Gegenstand bspw. als Achse, der ortsfeste Gegenstand bspw. als Lager zur Aufnahme der Achse ausgestaltet sein.

Das Einbringen der Kühlflüssigkeit vom drehbaren Gegenstand in den ortsfesten Gegenstand geschieht üblicherweise axial, d. h. die Übergabestelle liegt auf der Rotationsachse. Eine solche Anordnung ist günstig, weil sich darin die Übergabestelle gegenüber dem ortsfesten Gegenstand nicht bewegt. Es gibt jedoch Fälle, in denen der drehbare Gegenstand axial nicht zugänglich ist.

In einigen Anwendungen ist es wünschenswert, statt mit einer gewöhnlichen Kühlflüssigkeit mit einem flüssigem Gas zu kühlen. Kühlverfahren mit flüssigem Gas sind an sich bekannt. Dabei wird ein flüssiges Gas dem zu kühlenden Teil zugeleitet, wobei es üblicherweise umso mehr komprimiert wird, je näher es sich beim zu kühlenden Teil befindet. Beim zu kühlenden Teil wird ein Verdampfen und eine Expansion des zunächst flüssigen, komprimierten Gases zugelassen; dabei wird dem zu kühlenden Teil die dazu benötigte Wärmeenergie entzogen, wodurch ein Kühleffekt entsteht. Das Gas wird dann in gasförmigem Aggregatszustand abgeführt.

Wenn ein solches flüssiges Gas von einem ortsfesten Gegenstand in einen drehbaren Gegenstand eigebracht werden sollte, ergeben sich besondere Probleme. Das flüssige Gas befindet sich unter Umständen - je nach chemischer Zusammensetzung, Temperatur und Druck - in einem speziellen, für die Kühlung zwar vorteilhaften, für die Handhabung jedoch äusserst heiklen Aggregatszustand. Auf jeden Fall muss eine Verdampfung und/oder Expansion des flüssigen Gases vermieden werden, weil dies zu einem Einfrieren der Übergabestelle führen würde. Wegen des speziellen Aggregatszustandes des flüssigen Gases müssen insbesondere Dichtungsprobleme an der Übergabestelle gelöst werden.

Es ist Aufgabe der Erfingung, ein Verfahren für die interne Kühlung eines drehbaren Gegenstandes mit flüssigem Gas anzugeben, welches die obigen Probleme löst. Weiter ist es Aufgabe der Erfindung, eine Vorrichtung zur Durchführung dieses Verfahrens zu schaffen.

Die Aufgabe wird gelöst durch das erfindungsgemässe Verfahren und die erfindungsgemässe Vorrichtung, wie sie in den unabhängigen Patentansprüchen definiert sind.

Beim erfindungsgemässen Verfahren zur internen Kühlung eines drehbaren Gegenstandes wird flüssiges Gas aus mindestens einem Zuführkanal in einem ortsfesten Gegenstand in eine an einer Kontaktfläche zwischen dem ortsfesten Gegenstand und dem drehbaren Gegenstand befindliche kreisförmige Nut gepresst. Aus der kreisförmigen Nut wird das flüssige Gas in mindestens einen Kanal im drehbaren Gegenstand gepresst und mindestens einem zu kühlenden Teil zugeführt. Dort verdampft es unter Aufnahme von Verdampfüngswärme und wird als gasförmiges Gas abgeführt.

Vorzugsweise wird dem flüssigen Gas in der Umgebung des zu kühlenden Teils eine grössere Querschnittfläche zum Durchfluss zur Verfügung gestellt wird als die Summe der Querschnittflächen des mindestens einen Kanals, wodurch das flüssige Gas unter Aufnahme von Wärmeenergie verdampft und expandiert. Das Volumen des Gases nach der Expansion kann bspw. das 600fache des Volumens vor der Expansion betragen.

Die totale Querschnittfläche, welche dem flüssigen Gas auf dem Weg vom ortsfesten Gegenstand zum zu kühlenden Teil zur Verfügung gestellt wird, wird vorzugsweise konstant gelassen oder verkleinert, so dass das flüssige Gas auf dem Weg zum zu kühlenden Teil nicht expandiert und eine optimale Kühlwirkung beim zu kühlenden Teil erreicht wird. Besonders vorteilhaft ist es, die totale Querschnittfläche, welche dem flüssigen Gas auf dem Weg vom ortsfesten Gegenstand zum zu kühlenden Teil zur Verfügung gestellt wird, mindestens einmal verkleinert wird, so dass das flüssige Gas komprimiert wird. Dies kann bspw. durch Verengugnen der Kanäle realisiert werden. Während der Zuführkanal im ortsfesten Gegenstand einen Durchmesser von einigen Millimetern haben kann, kann der letzte Abschnitt des Kanals im drehbaren Gegenstand einen Durchmesser von 0.5 mm oder weniger haben; es können sogar kapillare Dimensionen verwendet werden. Mit "totale Querschnittfläche" ist dabei gemeint: die Querschnittfläche des einen Kanals, falls nur ein Kanal vorhanden ist, bzw. die Summe der Querschnittflächen aller Kanäle, falls mehrere Kanäle vorhanden sind; die Querschnittflächen werden dabei immer senkrecht zur Flussrichtung des Gases gemessen.

Die erfindungsgemässe Vorrichtung zur Durchführung des Verfahrens weist einen ortsfesten Gegenstand, in welchem ein um eine Drehachse drehbarer Gegenstand drehbar gelagert ist, auf. Der ortsfeste Gegenstand weist mindestens einen Zuführkanal für flüssiges Gas auf. Der drehbare Gegenstand ist von einer kreisförmigen Nut umgeben, in welche der mindestens eine Zuführkanal mündet und deren Zentrum auf der Drehachse des drehbaren Gegenstandes liegt. Die kreisförmige Nut kann im drehbaren Gegenstand und/oder im ortsfesten Gegenstand eingearbeitet sein. Der drehbare Gegenstand weist mindestens einen Kanal für flüssiges Gas auf, welcher aus der kreisförmigen Nut in die Umgebung eines zu kühlenden **T**eils führt.

Die Umgebung des zu kühlenden Teils weist vorzugsweise eine grössere Querschnittfläche auf als die Summe der Querschnittflächen des mindestens einen Kanals im drehbaren Gegenstand, wobei diese Querschnittflächen im wesentlichen in derselben Ebene senkrecht zur Rotationsachse gemessen werden. Dadurch wird dem Gas genügend Volumen für eine Expansion zur Verfügung gestellt. Die Umgebung des zu kühlenden Teils kann bspw. als mindestens eine Expansionskammer ausgebildet sein.

Die Querschnittfläche des Zuführkanals bzw.` falls mehrere Zuführkanäle vorhanden sind, die Summe der Querschnittflächen der Zuführkanäle, ist vorzugsweise grösser als das Doppelte der Querschnittfläche der kreisförmigen Nut. Wenn diese Forderung erfüllt ist, ist gewährleistet, dass das flüssige Gas im Bereich der kreisförmigen Nut nicht verdampft und/oder expandiert. Verdampfen und/oder Expandieren könnte zur Folge haben, dass der Umgebung der kreisförmigen Nut übermässig viel Wärme entzogen und diese Umgebung unerwünschterweise einfrieren würde.

Das Doppelte der Querschnittfläche der kreisförmigen Nut ist vorzugsweise grösser als die Summe der Querschnittflächen des mindestens einen Kanals. Die Summe der Querschnittflächen des mindestens einen Zuführkanals zur kreisförmigen Nut hin bleibt vorzugsweise konstant oder nimmt ab. Die Summe der Querschnittflächen des mindestens einen Kanals zur zu kühlenden Stelle hin bleibt vorzugsweise konstant oder nimmt ab. Durch solche Massnahmen wird wiederum das flüssige Gas auf seinem Weg zur zu kühlenden Stelle komprimiert, so dass eine optimale Kühlwirkung erreicht wird.

Um das Auftreten von Wärmestaus zu verhindern bzw. um Wärmestaus zu bekämpfen, wird mit Vorteil an denjenigen Stellen, wo Wärmestau auftreten kann, poröser Stahl eingesetzt. Dieser speicher Kälte und nimmt bei Bedarf Wärmeenergie auf.

Das erfindungsgemässe Verfahren kann mit Vorteil zum Kühlen von Formteilen in Spritzgiessmaschinen mit drehbaren Formen angewendet werden. Solche drehbare Formen bieten mannigfaltige Vorteile. Es besteht z. B. die Möglichkeit, zu verarbeitende Schmelze (bspw. Kunststoffschmelze) aus mehreren Einspritzstationen in die Form einzuspritzen. Damit können erstens gleichzeitig Formteile mit verschiedenen Geometrien, verschiedenen Farben oder aus verschiedenen Materialien hergestellt werden. Damit können zweitens auch Formteile aus mehreren Komponenten hergestellt werden (Mehrkomponentenverfahren), also Formteile, welche verschiedene Farben aufweisen oder aus mehreren Materialien bestehen (Montagespritzguss). Drehbare Fomen erlauben ausserdem den Einsatz von Zwischenstationen für verschiedene Optionen und kürzere Zykluszeiten. Das flüssige Gas kann kontinuierlich oder auch stossweise zugeführt werden, z. B. nur dann, wenn eine Kühlung innerhalb eines Spritzgiesszyklus nötig ist.

Mit dem erfindungsgmässen Verfahren bzw. der erfindungsgemässen Vorrichtung können nun die Zykluszeiten dank der äusserst effizienten Kühlung von soeben eingespritzten Formteilen jetzt noch massiv herabgesetzt werden. Die vorliegende Erfindung löst das Problem des Einführens des flüssigen Gases in die zeitweise rotierende Achse, auf welcher die Spritzgiessform aufgehängt ist.

Im folgenden wird die Erfindung anhand von Figuren detailliert beschrieben. Dabei zeigen schematisch:
- Fig. 1: ein (p,T)-Zustandsdiagramm für CO₂,
- Fig. 2: einen Längsschnitt durch eine beispielhafte Ausführungsform einer erfindungsgemässen Vorrichtung, verwendet in einer Spritzgiessmaschine,
- Fig. 3-5: ein Detail von verschiedenen Ausführungsformen der erfindungsgemässen Vorrichtung im Längsschnitt und
- Fig. 6: einen Längsschnitt durch eine weitere beispielhafte Ausführungsform einer erfindungsgemässen Vorrichtung, verwendet in einer Spritzgiessmaschine.

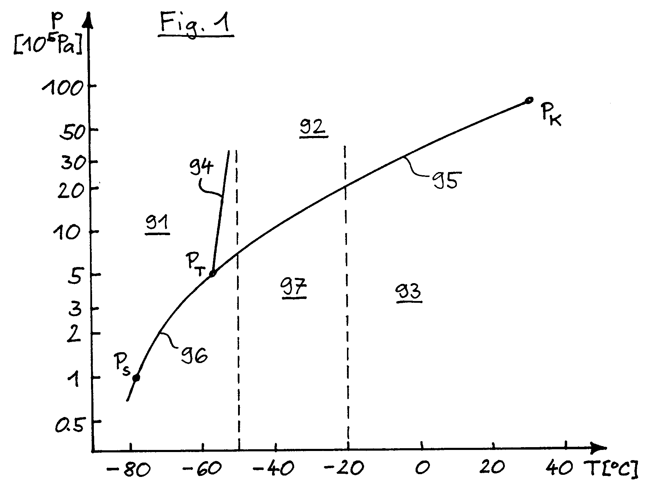

Als Kühlmedium wird beim erfindungsgemässen Verfahren bzw. in der erfindungsgemässen Vorrichtung vorzugsweise Kohlendioxid CO₂ benützt. **Figur 1** zeigt ein (p,T)-Zustandsdiagramm für CO₂, dessen Zahlenwerte aus LandoltBörnstein, Zahlenwerte und Funktionen, IV. Band, 4. Teil, Springer-Verlag, 6. Auflage, 1967, S. 178-179 und 296, entnommen sind. In diesem Diagramm ist auf der waagrechten Achse linear die Temperatur T in °C und auf der senkrechten Achse logarithmisch der Druck p in 10⁵ Pa (was ungefähr einer Atmosphäre entspricht) aufgetragen. Es lassen sich ein Gebiet 91 der festen Phase, ein Gebiet 92 der flüssigen Phase und ein Gebiet 93 der gasförmigen Phase unterscheiden. Diese Gebiete 91-93 sind durch eine Schmelzdruckkurve 94, eine Dampfdruckkurve 95 bzw. eine Sublimationsdruckkurve 96 voneinander getrennt. Die Kurven 94-96 treffen sich in einem Tripelpunkt P_{T}. Weitere charakteristische Punkte im (p,T)-Diagramm sind ein kritischer Punkt P_{K} und ein Sublimationspunkt P_{S}.

Das Kühlmedium CO₂ wird vorzugsweise in komprimiertem flüssigem Zustand bei Temperaturen von -50 bis -20 °C (223 bis 253 K) zum zu kühlenden Teil geführt. Dieser Temperaturbereich 97 ist in Fig. 1 gestrichelt eingezeichnet. Der Verlauf der Dampfdruckkurve 95 in diesem Temperaturbereich 97 zeigt, dass hohe Drücke zwischen ca. 7· 10⁵ und 20· 10⁵ Pa nötig sind, um das CO₂ flüssig zu halten. Soll diese Forderung eingehalten werden, so darf sich der Querschnitt von Zuführkanälen auf dem Weg zum zu kühlenden Teil nicht wesentlich vergrössern. Es dürfen auch keine Undichtigkeiten auftreten; dies macht die Übergabe des Kühlmediums vom ortsfesten Gegenstand zum drehbaren Gegenstand besonders schwierig.

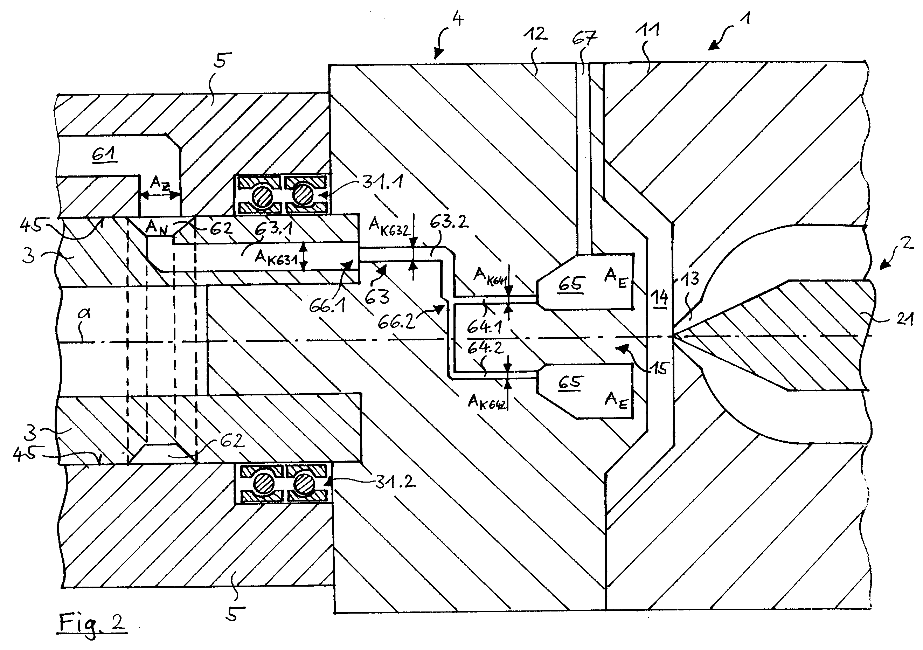

**Figur 2** zeigt einen schematischen Längsschnitt durch eine beispielhafte Ausführungsform einer erfindungsgemässen Vorrichtung. Die Vorrichtung ist in einer Spritzgiessmaschine mit einer um eine Rotationsachse a drehbaren Form 1 eingebaut. Davon ist schematisch bloss die Form 1, zusammengesetzt aus einer ersten Formhälfte 11 und einer zweiten Formhälfte 12, dargestellt. Die erste Formhälfte 11 weist einen Arischnitt 13 auf, durch welchen Kunststoffschmelze in eine formgebende Höhlung 14 zwischen der ersten Formhälfte 11 und der zweiten Formhälfte 12 einspritzbar ist. Von einer Einspritzdüse 2 ist nur ein Teil, bspw. ein Wärmeleittorpedo 21, dargestellt. Die zweite Formhälfte 12 ist auf einer Welle 3, bspw. einer Hohlwelle, montiert und bildet zusammen mit dieser einen drehbaren Gegenstand 4. Die Welle 3 ist, bspw. auf Kugellagern 31.1, 31.2, drehbar in einem ortsfesten Gegenstand 5 gelagert. Eine solche drehbare Spritzgiessform 1 bietet, wie eingangs erwähnt, viele Vorteile.

Es geht nun darum, einen nahe der formgebenden Höhlung 14 befindlichen Teil 15 der zweiten Formhälfte 12 und/oder die Kunststoffschmelze bzw. ein aus ihr durch Erstarren entstehendes und in der formgebenden Höhlung 14 befindliches Formteil effizient mit flüssigem Gas zu kühlen. Zu diesem Zweck ist der zu kühlende Teil 15 der zweiten Formhälfte 12 mit einer in diesem Ausführungsbeispiel kreisförmigen Expansionskammer 65 ausgestattet, in welcher zugeführtes flüssiges Gas verdampft und expandiert. Zwecks Zuführung des flüssigen Gases weist der ortsfeste Gegenstand 5 einen Zuführkanal 61 für flüssiges Gas auf. Der drehbare Gegenstand 4 ist von einer kreisförmigen Nut 62 umgeben, in welche der Zuführkanal 61 mündet. Die kreisförmige Nut befindet sich an einer Kontaktfläche 45 zwischen dem ortsfesten Gegenstand 5 und dem drehbaren Gegenstand 4; diese Kontaktfläche 45 entspricht der zylindrischen Aussenfläche der Welle 3. Die Übergabestelle zwischen dem Zuführkanal 61 und der kreisförmigen Nut 62 kann mit einer als Einstich ausgeführten (nicht dargestellten) Dichtung abgedichtet sein. Der drehbare Gegenstand 4 weist einen Kanal 63 aus bspw. zwei Kanalteilstücken 63.1, 63.2 für flüssiges Gas auf, welcher aus der kreisförmigen Nut 62 in die Expansionskammer 65 führt. Im Beispiel von Fig. 2 verzweigt sich der Kanal 63 in zwei oder auch mehrere Kanalzweige 64.1, 64.2. Die letzten Kanäle 64.1, 64.2 im drehbaren Gegenstand 4 haben typischerweise sehr kleine Durchmesser von 0.5 mm oder weniger.

Um eine Expansion des Gases am gewünschten Ort 15 zu erlauben, weist die Expansionskammer 65 eine viel grössere totale Querschnittfläche 2A_{E} auf als die Summe A_{K641} + A_{K642} der Querschnittflächen der Kanalzweige 64.1, 64.2; die totale Querschnittfläche 2A_{E} der Expansionskammer 65 ist vorzugsweise einige Hundert Mal, bspw. 600mal, grösser als die Summe A_{K641} + A_{K642} der Querschnittflächen der Kanalzweige 64.1, 64.2. Dabei werden diese Querschnittflächen A_{E}, A_{K641'} A_{K642} im wesentlichen in einer zur jeweiligen Flussrichtung des Gases senkrechten Ebene gemessen. Stehen dem Gas zwei Wege zur Verfügung wie bspw. in der kreisförmigen Expansionskammer 65, so muss zur Berechung der totalen Querschnittfläche 2A_{E} die entsprechende Querschnittfläche A_{E} doppelt gezählt werden.

Um hingegen ein Verdampfen und/oder eine Expansion des Gases auf dem Weg zur Expansionskammer 65 zu verhindern und das flüssige Gas zwecks Erreichen einer optimale Kühlwirkumg noch mehr zu komprimieren, sind Zuführkanal 61, kreisförmige Nut 62 und Kanäle 63.1, 63.2, 64.1, 64.2 wie folgt dimensioniert. Die Querschnittfläche Az des Zuführkanals 61 (gemessen in einer zur Flussrichtung des flüssigen Gases senkrechten Ebene) ist grösser als das Doppelte 2A_{N} der Querschnittfläche A_{N} der kreisförmigen Nut 62 (gemessen ebenfalls in einer zur Flussrichtung des flüssiggen Gases senkrechten Ebene, d. h. in einer Ebene, welche die Rotationsachse a beinhaltet). Das Doppelte 2A_{N} der Querschnittfläche A_{N} der kreisförmigen Nut 62 ist grösser als die Querschnittfläche A_{K631} des ersten Kanalteilstücks 63.1. Die Querschnittfläche Az des Zuführkanals 61 bleibt zur kreisförmigen Nut 62 hin konstant oder nimmt ab. Die Querschnittfläche A_{K631}, A_{K632} des Kanals 63 bzw. die Summe A_{K641} + A_{K642} der Querschnittflächen der Kanalzweige 64.1, 64.2 nimmt zur Expansionskammer 65 hin ab, bspw. an einer oder mehreren Verengungen 66.1, 66.2, vorzugsweise um je 5 bis 10 %.

Zusammenfassend gilt also für die in Fig. 1 eingezeichneten Querschnittflächen A_{Z}, A_{N}, A_{K631}, A_{K632}, A_{K641}, A_{K642}, A_{E} die Ungleichheit
2A_{E} > A_{Z} ≥ 2A_{N} ≥ A_{K631} ≥ A_{K632} ≥ A_{K641} + A_{K642} ,
wobei der Faktor vor A_{E} für das Beispiel einer kreisförmigen Expansionskammer 2 beträgt, für andere Geometrien jedoch auch einen anderen Wert, bspw. 1, annehmen kann.

Nach der Expansion des Gases in der Expansionskammer 65 wird das Gas in gasförmigem Zustand abgeführt. Zu diesem Zweck kann z. B. die zweite Formhälfte 12 im Bereich 15 der Expansionskammer 65 zumindest teilweise aus porösem Stahl gefertigt sein, und das Gas kann über die Poren abgeführt werden. Alternativ dazu kann die zweite Formhälfte 12 mit Evakuierungsbohrungen 67 versehen sein, über welche das Gas nach aussen oder in die formgebende Höhlung 14 abgeführt wird. Solche Evakuierungsbohrungen 67 können auch als Expansionsbohurngen mit grosser Querschnittfläche ausgeführt sein; ihre totale Querschnittfläche kann vorzugsweise einige Hundert Mal, bspw. 600mal, grösser sein als die Summe A_{K641} + A_{K642} der Querschnittflächen der Kanalzweige 64.1, 64.2. Die Evakuierungsbohrungen 67 können bspw. durch Galvanisieren hergestellt werden. An der Oberfläche der zweiten Formhälfte 12 kann das abgeführte Gas entweder einfach in die Umgebungsatmosphäre entweichen. Es kann aber auch aufgefangen, verflüssigt, zu einem Tank zurückgeführt und erneut zur Kühlung gebraucht werden; mit einem solchen Recycling lassen sich ca. 95 % des Gases nach einem Kühlprozess wieder brauchen, was sehr wirtschaftlich ist.

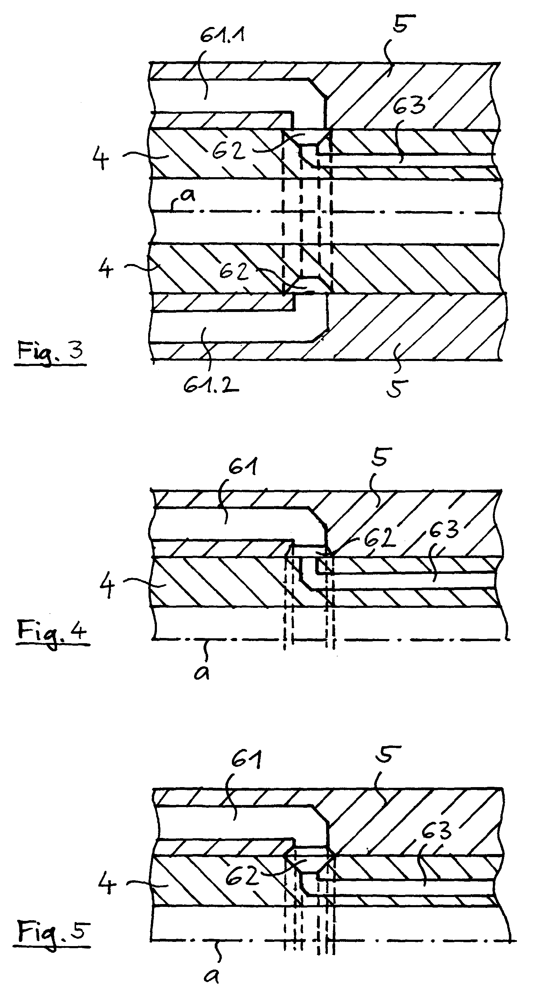

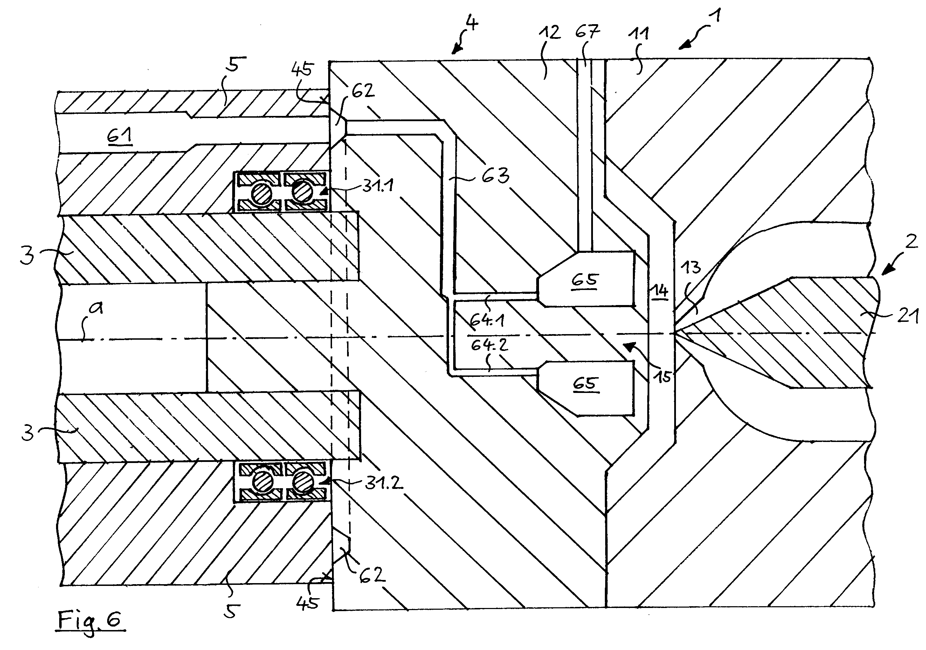

In den Figuren 3-5 ist ein Detail von verschiedenen Ausführungsformen der erfindungsgemässen Vorrichtung im Längsschnitt dargestellt, närnlich die kreisförmige Nut 62, ein Teil des Zuführkanals 61 im ortsfesten Gegenstand 5 und ein Teil des Kanals 63 im drehbaren Gegenstand 4. Der Einfachheit halber ist in den Figuren 3 und 4 nur eine Hälfte des Längsschnittes des drehbaren Gegenstandes 4 dargestellt. Im Ausführungsbeispiel von **Figur 3** ist die kreisförmige Nut 62 ebenfalls, wie in Fig. 2, im drehbaren Gegenstand 4 eingearbeitet. Figur 3 zeigt eine Variante mit mehreren, bspw. zwei, Zuführkanälen 61.1, 61.2. **Figur 4** zeigt ein Ausführungsbeispiel, in welchem die kreisförmige Nut 62 im ortsfesten Gegenstand 5 eingearbeitet ist. Bei **Figur 5** handelt es sich um eine Kombination der Figuren 3 und 4 insofern, als dass die kreisförmige Nut 62 sowohl im drehbaren Gegenstand 4 als auch im ortsfesten Gegenstand liegt 5.

In den Ausführungsbeispielen der Figuren 2-5 wurde das flüssige Gas jeweils radial nach innen, senkrecht zur Rotationsachse a in die kreisförmige Nut 63 - gepresst. Dies muss gemäss der Erfindung nicht notwendigerweise so sein. **Figur 6** zeigt eine (ansonsten zu Fig. 2 analoge) Ausführungsform der erfindungsgemässen Vorrichtung, in welcher das flüssige Gas parallel zur Rotationsachse a in eine kreisförmige Nut 62 gepresst wird. Die kreisförmige Nut 62 ist in diesem Beispiel in der zweiten Formhälfte 12 eingearbeitet. Die Kontaktfläche 45, in welcher sich die kreisförmige Nut 62 befindet, liegt in diesem Ausführungsbeispiel senkrecht zur Rotationsachse a. Andere Ausführungsformen sind denkbar, in denen das flüssige Gas sogar radial nach aussen oder in eine andere Richtung in die kreisförmige Nut 62 gepresst wird. Selbstverständlich gehören auch Kombinationen der in den Figuren 2-6 dargestellten Ausführungsformen zur Erfindung.

## Patentansprüche

1. Verfahren zur internen Kühlung eines um eine Drehachse (a) drehbaren Gegenstandes (4) mit flüssigem Gas, welches aus einem ortsfesten Gegenstand (5) in den drehbaren Gegenstand (4) eingeführt wird, **dadurch gekennzeichnet,** dass das flüssige Gas aus mindestens einem Zuführkanal (61) im ortsfesten Gegenstand (5) in eine an einer Kontaktfläche (45) zwischen dem ortsfesten Gegenstand (5) und dem drehbaren Gegenstand (4) befindliche kreisförmige Nut (62) gepresst, aus der kreisförmigen Nut (62) in mindestens einen Kanal (63, 64.1, 64.2) im drehbaren Gegenstand (4) gepresst und mindestens einem zu kühlenden Teil (15) zugeführt wird, wo es unter Aufnahme von Verdampfungswärme verdampft und als gasförmiges Gas abgeführt wird.

2. Verfahren nach Anspruch 1, **dadurch gekennzeichnet,** dass dem flüssigen Gas in der Umgebung (65) des zu kühlenden Teils (15) eine grössere Querschnittfläche (2A_{E}) zum Durchfluss zur Verfügung gestellt wird als die Summe (A_{K641} + A_{K642}) der Querschnittflächen des mindestens einen Kanals (63, 64.1, 64.2), wodurch das flüssige Gas unter Aufnahme von Wärmeenergie verdampft und expandiert.

3. Verfahren nach Anspruch 1 oder 2, **dadurch gekennzeichnet,** dass die totale Querschnittfläche, welche dem flüssigen Gas auf dem Weg vom ortsfesten Gegenstand (5) zum zu kühlenden Teil (15) zur Verfügung gestellt wird, konstant gelassen oder verkleinert wird, so dass das flüssige Gas nicht expandiert.

4. Verfahren nach einem der Ansprüche 1-3, **dadurch gekennzeichnet,** dass die totale Querschnittfläche, welche dem flüssigen Gas auf dem Weg vom ortsfesten Gegenstand (5) zum zu kühlenden Teil (15) zur Verfügung gestellt wird, mindestens einmal verkleinert wird, so dass das flüssige Gas komprimiert wird.

5. Verfahren nach einem der Ansprüche 1-4, **dadurch gekennzeichnet,** dass das flüssige Gas in Richtung der Drehachse (a) in die kreisförmige Nut (62) gepresst wird.

6. Verfahren nach einem der Ansprüche 1-5, **dadurch gekennzeichnet,** dass als Gas CO₂ verwendet wird.

7. Anwendung des Verfahrens nach einem der Ansprüche 1-6 zum Kühlen von Formteilen in Spritzgiessmaschinen mit drehbaren Formen (1).

8. Vorrichtung zur Durchführung des Verfahrens nach einem der Ansprüche 1-6, mit einem ortsfesten Gegenstand (5), welcher mindestens eine Kontaktfläche (45) mit einem um eine Drehaches (a) drehbaren Gegenstand (4) aufweist, **dadurch gekennzeichnet,** dass der ortsfeste Gegenstand (5) mindestens einen Zuführkanal (61) für flüssiges Gas aufweist dass sich an der Kontaktfläche (45) zwischen dem ortsfesten Gegenstand (5) und dem drehbaren Gegenstand (4) eine kreisförmige Nut (62) befindet, in welche der mindestens eine Zuführkanal (61) mündet und deren Zentrum auf der Drehachse (a) des drehbaren Gegenstandes (4) liegt, und dass der drehbare Gegenstand (4) mindestens einen Kanal (63, 64.1, 64.2) für flüssiges Gas aufweist, welcher aus der kreisförmigen Nut (62) in die Umgebung (65) eines zu kühlenden Teils (15) führt.

9. Vorrichtung nach Anspruch 8, **dadurch gekennzeichnet,** dass die Umgebung (65) des zu kühlenden Teils (15) eine grössere Querschnittfläche (A_{E}) aufweist als die Summe (A_{K641} + A_{K642}) der Querschnittflächen des mindestens einen Kanals (63, 64.1, 64.2).

10. Vorrichtung nach Anspruch 9, **dadurch gekennzeichnet,** dass die Umgebung (65) des zu kühlenden Teils (15) als mindestens eine Expansionskammer ausgebildet ist.

11. Vorrichtung nach einem der Ansprüche 8-10, **dadurch gekennzeichnet,** dass die Summe der Querschnittflächen (A_{Z}) des mindestens einen Zuführkanals (61) grösser ist als das Doppelte (2A_{N}) der Querschnittfläche der kreisförmigen Nut (62).

12. Vorrichtung nach einem der Ansprüche 8-11, **dadurch gekennzeichnet,** dass das Doppelte (2A_{N}) der Querschnittfläche der kreisförmigen Nut (62) grösser ist als die Summe (A_{K631}) der Querschnittflächen des mindestens einen Kanals (63).

13. Vorrichtung nach einem der Ansprüche 8-12, **dadurch gekennzeichnet,** dass die Summe (A_{Z}) der Querschnittflächen des mindestens einen Zuführkanals (61) zur kreisförmigen Nut (62) hin konstant bleibt oder abnimmt.

14. Vorrichtung nach einem der Ansprüche 8-13, **dadurch gekennzeichnet,** dass die Summe der Querschnittflächen (A_{K631}) des mindestens einen Kanals (63) zum zu kühlenden Teil (15) hin konstant bleibt oder abnimmt.

15. Vorrichtung nach einem der Ansprüche 8-14, dadurch gekennzeichnet, dass die kreisförmige Nut (62) im drehbaren Gegenstand (4) und/oder im ortsfesten Gegenstand (5) eingearbeitet ist.
